# EUROPEAN PATENT APPLICATION

(11) **EP 4 516 386 A1**
(43) Date of publication of application: **05.03.2025**
(21) Application number: 23796022.4
(22) Date of filing: 04.04.2023
(51) Int. Cl.: B01D 63/08, B01D 53/22, B01D 63/00

(54) **SEPARATION MEMBRANE ELEMENT AND SEPARATION DEVICE**

(30) Priority: 26.04.2022 JP 2022072320
(71) Applicant: Sumitomo Chemical Company, Limited, Tokyo 103-6020 (JP)
(72) Inventor: TASAKI, Tsutomu, Osaka-shi, Osaka 554-8558 (JP)
(74) Representative: Winter, Brandl - Partnerschaft mbB
(86) International application number: PCT/JP2023/013888
(87) International publication number: WO 2023/210275

(57) **Abstract**

A separation membrane element in accordance with an embodiment of the present invention includes: a container; and a separation membrane including a region provided in a flat membrane shape in the container. The separation membrane includes a separation functional layer that selectively separates a specific fluid component contained in a raw material fluid. The container houses a laminate that includes (i) two permeate-side spacer members through which a permeate fluid that has permeated through the separation membrane flows, (ii) the separation membrane provided between the two permeate-side spacer members, and (iii) a feed-side spacer member through which the raw material fluid flows. The separation membrane element includes a sealing part for preventing a fluid flowing through the feed-side spacer member and a fluid flowing through the two permeate-side spacer members from being mixed with each other. The laminate includes a 1st end part at which end parts of the two permeate-side spacer members are located further on an outer side than is an end part of the separation functional layer in a plan view. The sealing part includes a first sealing part provided at the 1st end part in a position that is further on the outer side than is the end part of the separation functional layer in the plan view and that is between the two permeate-side spacer members.

## Description

### Technical Field

The present invention relates to a separation membrane element and a separation device including the separation membrane element.

### Background Art

There is known a separation membrane element of a plate-and-frame type (for example, Patent Literatures 1 to 4) in which flat membranes are stacked as separation membranes that separate a specific fluid component from a raw material fluid such as liquid or gas. Such separation membranes each include a sealing part in order to prevent mixing of the raw material fluid and a permeate fluid that has permeated through the separation membranes.

### Citation List

### [Patent Literature]

[Patent Literature 1] Japanese Patent Application Publication Tokukai No. 2017-000965
[Patent Literature 2] Japanese Patent Application Publication Tokukai No. 2017-000964
[Patent Literature 3] Specification of US Patent Application Publication No. 2018/0065091
[Patent Literature 4] Published Japanese Translation of PCT International Application Tokuhyo No. 2016-500335

### Summary of Invention

### Technical Problem

The separation membrane element has a feed-side space and a permeate-side space separated from each other by a separation membrane. The separation membrane of the plate-and-frame type includes a permeate-side sealing part provided in the permeate-side space and also a feed-side sealing part provided in the feed-side space. The feed-side sealing part is affected by an internal pressure generated by feeding of the raw material fluid and therefore may suffer a deterioration in gas tightness when fluid separation is carried out.

An object of the present invention is to provide: a separation membrane element including a sealing part that is excellent in gas tightness at the time when a raw material fluid is fed; and a separation device including the separation membrane element.

### Solution to Problem

The present invention provides a separation membrane element and a separation device below.

< 1 > A separation membrane element, including: a container; and a separation membrane including a region provided in a shape of a flat membrane in the container,
   the separation membrane including a separation functional layer that selectively separates a specific fluid component contained in a raw material fluid,
   the container housing therein a laminate that includes (i) two permeate-side spacer members through each of which a permeate fluid that has permeated through the separation membrane flows, (ii) the separation membrane provided between the two permeate-side spacer members, and (iii) a feed-side spacer member through which the raw material fluid flows,
   the separation membrane element further including a sealing part for preventing a fluid flowing through the feed-side spacer member and a fluid flowing through the two permeate-side spacer members from being mixed with each other,
   the laminate including a 1st end part at which an end part of each of the two permeate-side spacer members is located further on an outer side than is an end part of the separation functional layer in a plan view,
   the sealing part including a first sealing part provided at the 1st end part in a position that is further on the outer side than is the end part of the separation functional layer in the plan view and that is between the two permeate-side spacer members.
<2> The separation membrane element described in < 1 >, wherein the first sealing part is an adhesive layer.
<3> The separation membrane element described in < 1 > or <2>, wherein, when a specimen prepared by being cut out from the laminate so as to include the first sealing part is subjected to a T-peel test that causes peeling between the separation membrane and the feed-side spacer member, the specimen exhibits a peel strength of not less than 15.0 MPa.
<4> The separation membrane element described in any one of < 1 > to <3>, wherein: the separation membrane includes the separation functional layer on a porous membrane;
   in the plan view, the end part of each of the two permeate-side spacer members which end part is at the 1st end part is located further on the outer side than is an end part of the separation membrane; and
   the first sealing part is located further on the outer side than is the end part of the separation membrane in the plan view.
<5> The separation membrane element described in any one of < 1 > to <4>, wherein: in the plan view, the end part of each of the two permeate-side spacer members which end part is at the 1st end part is located further on the outer side than is an end part of the feed-side spacer member; and
   the first sealing part is located further on the outer side than is the end part of the feed-side spacer member in the plan view.
<6> The separation membrane element described in any one of < 1 > to < 5 >, wherein: the laminate includes a membrane laminate part in which the separation membrane, the feed-side spacer member, and the separation membrane are stacked in this order; and
   the membrane laminate part is provided between the two permeate-side spacer members.
<7> The separation membrane element described in <6>, wherein: in the plan view, the end part of each of the two permeate-side spacer members which end part is at the 1st end part is located further on the outer side than is an end part of the membrane laminate part; and
   the first sealing part is located further on the outer side than is the end part of the membrane laminate part in the plan view.
<8> The separation membrane element described in < 1> to <7>, wherein: the laminate includes a 2nd end part extending in a direction intersecting with the 1st end part in the plan view;
   the sealing part includes a second sealing part provided at positions corresponding to respective lamination positions of the two permeate-side spacer members in a lamination direction of the laminate; and
   the second sealing part is provided at the 2nd end part.
<9> The separation membrane element described in <8>, wherein the first sealing part and the second sealing part are bonded to each other at a position at which the 1st end part and the 2nd end part intersect with each other in the plan view.
< 10 > The separation membrane element described in <9>, wherein the first sealing part and the second sealing part are each an adhesive layer.
< 11 > The separation membrane element described in any one of < 1 > to < 10 >, wherein the raw material fluid is gas.
< 12 > The separation membrane element recited in any one of < 1 > to < 11 >, wherein the specific fluid component is acid gas.
< 13 > A separation device, including: a separation membrane element recited in any one < 1 > to < 12 >;
   a first feed part and a first discharge part each of which communicates with the feed-side spacer member; and
   a second discharge part that communicates with the two permeate-side spacer members.
< 14 > The separation device recited in < 13 >, further including a second feed part that communicates with the two permeate-side spacer members.

### Advantageous Effects of Invention

According to the present invention, it is possible to provide: a separation membrane element including a sealing part that is excellent in gas tightness at the time when a raw material fluid is fed; and a separation device including the separation membrane element.

### Brief Description of Drawings

Fig. 1 is a perspective view schematically illustrating a separation membrane element in accordance with an embodiment of the present invention.
Fig. 2 is an exploded perspective view illustrating a laminate included in the separation membrane element in accordance with an embodiment of the present invention.
Fig. 3 is a schematic cross-sectional view for describing a 1st end part of the laminate included in the separation membrane element in accordance with an embodiment of the present invention.
Fig. 4 is a schematic cross-sectional view for describing a 2nd end part of the laminate included in the separation membrane element in accordance with an embodiment of the present invention.
Fig. 5 is a perspective view illustrating a production process for producing the separation membrane element in accordance with an embodiment of the present invention.
Fig. 6 is a perspective view illustrating a continuation of the production process illustrated in Fig. 5.
Fig. 7 is a perspective view illustrating a continuation of the production process illustrated in Fig. 6.
Fig. 8 is a schematic view illustrating a test device for a gas leakage test carried out in Examples.

### Description of Embodiments

The following description will discuss an embodiment of the present invention, with reference to drawings. The present invention, however, is not limited the embodiment below.

### (Separation membrane element)

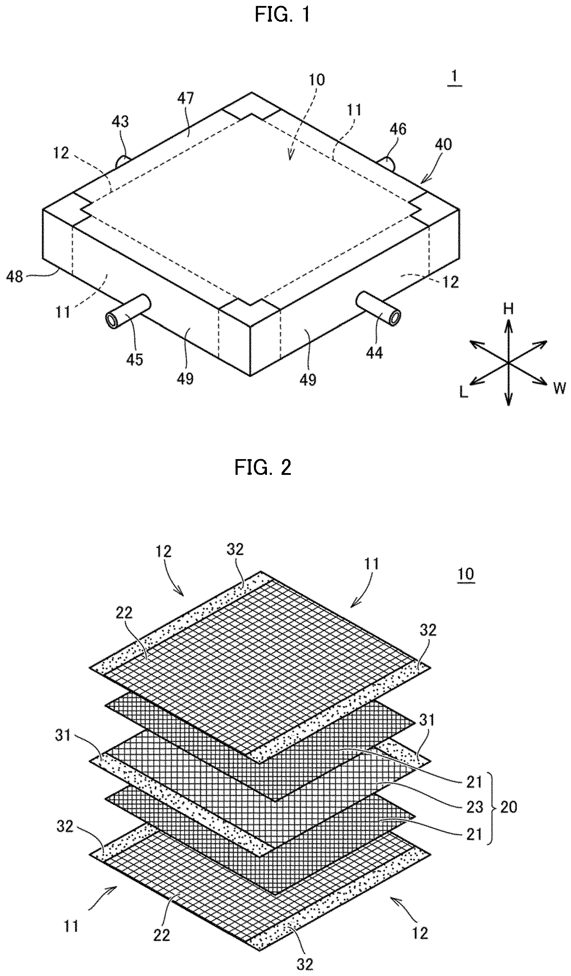

Fig. 1 is a perspective view schematically illustrating a separation membrane element in accordance with an embodiment of the present invention. Fig. 2 is an exploded perspective view illustrating a laminate included in the separation membrane element in accordance with an embodiment of the present invention. In Fig. 1, L represents a longitudinal direction of a container, W represents a width direction of the container, and H represents a height direction of the container.

A separation membrane element 1 includes: a container 40; and separation membranes 21 (Fig. 2) each including a region that is provided in a shape of a flat membrane in the container 40. The "separation membranes each including a region that is provided in a shape of a flat membrane in the container 40" means that the separation membranes 21 are each housed in the container 40 so as to include a region that is provided in a flat state without being rolled into a roll shape or a cylindrical shape. The separation membranes 21 housed in the container 40 may each include a bent portion, provided that the separation membranes 21 each include a portion that is provided in a shape of a flat membrane in the container 40. As described later, the separation membranes 21 may each be housed in the container 40 in a state of being folded in half so as to form a region in a shape of a flat membrane. The separation membrane element 1 is a separation membrane element of a plate-and-frame type.

The separation membranes 21 each include a separation functional layer that selectively separates a specific fluid component contained in a raw material fluid. The separation membranes 21 may each be constituted solely by the separation functional layer or have a structure in which the separation functional layer and a porous membrane are stacked. The porous membrane can be provided on one surface or both surfaces of the separation functional layer and support or protect the separation functional layer.

The container 40 houses therein a laminate 10 having: two permeate-side spacer members 22; and the separation membranes 21 and a feed-side spacer member 23 provided between the two permeate-side spacer members 22. In Fig. 1, the height direction H of the container corresponds to a lamination direction of the laminate 10. The separation membranes 21 housed in the laminate 10 are stacked so as to each include a region provided in a shape of a flat membrane in the container 40. The permeate-side spacer members 22 and the feed-side spacer member 23 included in the laminate 10 are ordinarily also stacked so as to each include a region provided in a shape of a flat membrane in the container 40.

It is only necessary that the laminate 10 includes a portion in which a permeate-side spacer member 22, a separation membrane 21, the feed-side spacer member 23, and a permeate-side spacer member 22 are stacked in this order. The laminate 10 may, for example, include a membrane laminate part 20 in which a separation membrane 21, the feed-side spacer member 23, and a separation membrane 21 are stacked in this order, as illustrated in Fig. 2. The laminate 10 preferably has a structure in which the membrane laminate part 20 is provided between the two permeate-side spacer members 22.

In the laminate 10, the membrane laminate part 20 and the permeate-side spacer member 22 placed on top of the membrane laminate part 20 constitute a membrane leaf. The membrane leaf has a layer structure in which a separation membrane 21, the feed-side spacer member 23, a separation membrane 21, and the permeate-side spacer member 22 are stacked in this order. Although Fig. 2 illustrates the laminate 10 in a case where a single membrane leaf is provided on top of a single permeate-side spacer member 22, it is preferable that the laminate 10 have a structure in which a plurality of membrane leaves are stacked on top of the permeate-side spacer member 22. The number of membrane leaves included in the laminate 10 is not particularly limited, but can be, for example, not less than 2 and not more than 100, not less than 5 and not more than 50, or not less than 10 and not more than 30. The laminate 10 preferably has permeate-side spacer members 22 as its topmost face and bottommost face, respectively, and in this case, the permeate-side spacer member 22 serving as the top face is part of a membrane leaf.

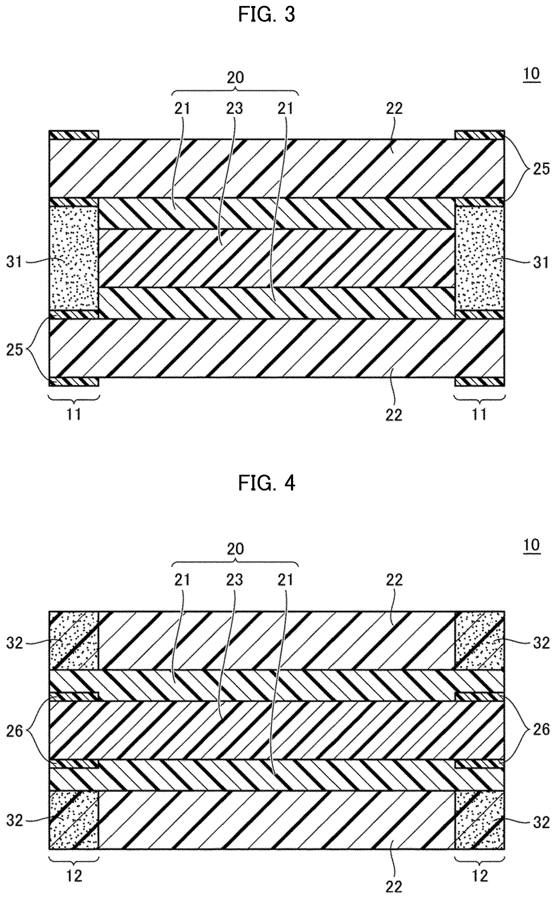

Fig. 3 is a schematic cross-sectional view for describing a 1st end part of the laminate included in the separation membrane element in accordance with an embodiment of the present invention. Fig. 4 is a schematic cross-sectional view for describing a 2nd end part of the laminate included in the separation membrane element in accordance with an embodiment of the present invention.

The laminate 10 includes a 1st end part 11 at which, in a plan view, respective end parts of the permeate-side spacer members 22 are located further on an outer side than is an end part of the membrane laminate part 20 (Fig. 3). At the 1st end part 11, the end parts of the permeate-side spacer members 22 are located further on the outer side than are end parts of the separation membranes 21 and the feed-side spacer member constituting the membrane laminate part 20. As illustrated in Figs. 1 and 2, in a case where the laminate 10 has a shape of a quadrangle such as a rectangle (a square or a rectangle) in a plan view, the 1st end part 11 is provided preferably along an entire one side of the laminate 10 in a plan view. In this case, the 1st end part 11 ordinarily includes two end parts, and it is preferable that the two end parts be located opposite to each other in a plan view of the laminate 10 (Fig. 2). The two end parts may be provided along entire two sides of the laminate 10 in a plan view.

The permeate-side spacer members 22 can each have, at an end part thereof provided at the 1st end part 11, a first tape 25 for preventing a sealing material for forming a first sealing part 31 (described later) from seeping in. It is preferable that the first tape 25 be provided at least on a side of the end part of each of the permeate-side spacer members 22 which side faces the membrane laminate part 20. The first tape 25 may be provided on both surfaces of the end part as illustrated in Fig. 3.

The laminate 10 can include a 2nd end part 12 which extends in a direction that intersects with the 1st end part 11 in a plan view (Figs. 2 and 4). As illustrated in Figs. 1 and 2, in a case where the laminate 10 has a rectangular shape in a plan view, the 2nd end part 12 is preferably provided along an entire one side that is orthogonal to the 1st end part 11. In this case, the 2nd end part 12 may be a single end part or have two end parts. In a case where the 2nd end part 12 has two end parts, it is preferable that the two end parts be located opposite to each other in a plan view of the laminate 10 (Fig. 2). The two end parts may be provided along entire two sides of the laminate 10 in a plan view.

The feed-side spacer member 23 can have, at an end part thereof provided at the 2nd end part 12, a second tape 26 for preventing a sealing material for forming a second sealing part 32 (described later) from seeping in (Fig. 4). It is preferable that the second tape 26 be provided on a side of the end part of the feed-side spacer member 23 which side faces a separation membrane 21. In a case where separation membranes 21 are provided on both surfaces of the feed-side spacer member 23, the second tape 26 may be provided on both surfaces of the end part.

The separation membrane element 1 includes a sealing part for preventing a fluid flowing through the feed-side spacer member 23 and a fluid flowing through the permeate-side spacer members 22 from being mixed with each other. The fluid flowing through the feed-side spacer member 23 is, for example, a raw material fluid and a non-permeate fluid which has not permeated through a separation membrane 21. The fluid flowing through the permeate-side spacer members 22 is, for example, a permeate fluid which has permeated through a separation membrane 21 and a sweep fluid that is fed to a permeate-side spacer member 22 and is discharged together with the permeate fluid. The sweep fluid is a fluid that is inactive against the separation functional layer of a separation membrane.

The sealing part includes the first sealing part 31 provided at the 1st end part 11 of the laminate 10 (Figs. 2 and 3). The first sealing part 31 is provided at a position that is further on the outer side than is an end part of the membrane laminate part 20 in a plan view of the laminate 10 and that is between the two permeate-side spacer members 22 provided on both sides (both surfaces) of the membrane laminate part 20. The first sealing part 31 is ordinarily provided at an end part of the laminate 10 other than (i) an end part on a side where the raw material fluid for the feed-side spacer member 23 is fed and (ii) an end part on a side where the non-permeate fluid is discharged (Fig. 2) In a case where the laminate 10 has a rectangular shape in a plan view, the first sealing part 31 is preferably provided at the 1st end part 11 that is constituted by two opposite sides as a whole.

It is preferable that, as illustrated in Fig. 3, the first sealing part 31 be provided at the 1st end part 11 so as to include a position corresponding to a lamination position of the feed-side spacer member 23. The position corresponding to the lamination position of the feed-side spacer member 23 means not only a position occupied by the feed-side spacer member 23 but also a position that would be occupied by an extended portion of the feed-side spacer member 23 if the feed-side spacer member 23 were extended in a direction (a horizontal direction in Fig. 3) parallel to a plane of the laminate 10. It is preferable that, as illustrated in Fig. 3, the first sealing part 31 be provided so as to fill a recess which is created because end parts of the permeate-side spacer members 22 are located further on the outer side than is an end part of the membrane laminate part 20. The first sealing part 31 may be bonded to an end part of the membrane laminate part 20 at the 1st end part 11. A sealing material (described later) for forming the first sealing part 31 may impregnate the end part of the membrane laminate part 20, and the first sealing part 31 may be formed so as to include the impregnated portion.

The sealing part can include the second sealing part 32 which is provided so as to include positions corresponding to lamination positions of the permeate-side spacer members 22 in the lamination direction of the laminate 10 (Figs. 2 and 4). The positions corresponding to the lamination positions of the permeate-side spacer members 22 means not only positions occupied by the permeate-side spacer members 22 but also positions that would be occupied by extended portions of the permeate-side spacer members 22 if the permeate-side spacer members 22 were extended in a direction (a horizontal direction in Fig. 4) parallel to the plane of the laminate 10. The second sealing part 32 may be formed such that, as illustrated in Fig. 4, a sealing material (described later) for forming the second sealing part 32 impregnates portions of the permeate-side spacer members 22, and the second sealing part 32 is formed so as to include the impregnated portions.

The second sealing part 32 is ordinarily provided at an end part of the laminate 10 other than an end part on a side where the permeate fluid in the permeate-side spacer members 22 is discharged (Fig. 2) In a case where the sweep fluid is fed to the permeate-side spacer members 22, the second sealing part 32 is provided at an end part other than an end part on a side where the sweep fluid is fed (Fig. 2).

The second sealing part 32 may be provided at the 2nd end part 12 of the laminate 10. In a case where the laminate 10 has a rectangular shape in a plan view, the second sealing part 32 is preferably provided at the 2nd end part 12 that is constituted by two opposite sides as a whole (Fig. 2).

Although not illustrated, the second sealing part 32 may be provided at the 1st end part 11 of the laminate 10 in addition to the 2nd end part 12. It is preferable that the second sealing part 32 be provided along an entire one side of the laminate 10 in a plan view, which one side constitutes the 1st end part 11. The second sealing part 32 provided at the 1st end part 11 may also be formed such that (i) the second sealing part 32 is located in positions corresponding to the lamination positions of the permeate-side spacer members 22 in the lamination direction of the laminate 10, (ii) a sealing material impregnates portions of the permeate-side spacer members 22, and (iii) the second sealing part 32 includes the impregnated portions. In a case where the second sealing part 32 is provided also at the 1st end part 11, the second sealing part 32 may be provided at two end parts included in the 2nd end part 12 and one end part of the 1st end part 11, in a state where the portions of the second sealing part 32 at the 2nd end part are connected to the portion of the second sealing part 32 at the 1st end part 11 in a plan view (for example, in a U shape).

It is preferable that the first sealing part 31 and the second sealing part 32 be bonded to each other at a position (may hereinafter be referred to as "position of intersection") at which the 1st end part 11 and the 2nd end part 12 intersect with each other in a plan view. In the laminate 10 illustrated in Figs. 1 and 2, the position of intersection may be at a corner part of the laminate 10 in a plan view.

The container 40 can have (i) a first feed opening 43 for feeding the raw material fluid by communicating with the feed-side spacer member 23 of the laminate 10, (ii) a first discharge opening 44 for discharging the non-permeate fluid by communicating with the feed-side spacer member 23 of the laminate 10, and (iii) a second discharge opening 46 for discharging the permeate fluid by communicating with the permeate-side spacer members 22 of the laminate 10. The container 40 may further have a feed and discharge opening 45 communicating with the permeate-side spacer members 22 of the laminate 10. The feed and discharge opening 45 can be used as a second feed opening for feeding the sweep fluid or as a third discharge opening for discharging the permeate fluid.

In the separation membrane element 1, (i) the 2nd end part 12 of the laminate 10 is provided so as to face side wall parts 49 of the container 40 respectively having the first feed opening 43 and the first discharge opening 44 formed therein, and (ii) the 1st end part 11 of the laminate 10 is provided so as to face a side wall part 49 of the container 40 having the second discharge opening 46 formed therein (Fig. 1). In a case where the feed and discharge opening 45 of the container 40 is not used, or in a case where the container 40 does not have the feed and discharge opening 45, the second sealing part 32 is formed at the 1st end part 11 of the laminate 10. In a case where the container 40 has the feed and discharge opening 45 and the feed and discharge opening 45 is used, it is possible to feed the sweep fluid to the permeate-side spacer members 22 through the feed and discharge opening 45 or discharge the permeate fluid through the feed and discharge opening 45, by not forming the second sealing part 32 at the 1st end part 11 of the laminate 10.

In the separation membrane element 1 having the above-described structure, separation of a specific fluid component can be carried out in the following manner. First, the raw material fluid is fed into the feed-side spacer member 23 by feeding the raw material fluid to a 2nd end part 12 side of the laminate 10 through the first feed opening 43 of the container 40. The separation functional layer of each separation membrane 21 is capable of selectively allowing a specific fluid component contained in the raw material fluid flowing through the feed-side spacer member 23 to permeate through the separation functional layer. As a result, a content of the specific fluid component in the permeate fluid that has permeated through the separation membrane 21 is higher than that in the raw material fluid. Since the separation membrane element 1 includes the first sealing part 31, the raw material fluid fed to the feed-side spacer member 23 and the non-permeate fluid that has not permeated through the separation membranes 21 are prevented from being mixed into the permeate fluid flowing through the permeate-side spacer members 22. Also, since the separation membrane element 1 includes the second sealing part 32, the permeate fluid that has permeated through the separation membranes 21 and flows through the permeate-side spacer members 22 is prevented from being mixed into the raw material fluid and the non-permeate fluid flowing through the feed-side spacer member 23. The non-permeate fluid that has not permeated through the separation membranes 21 flows through the feed-side spacer member 23 is discharged to the outside of the separation membrane element 1 through the first discharge opening 44 from the 2nd end part 12 side of the laminate 10 which faces the first discharge opening 44 of the container 40. The permeate fluid that has permeated through the separation membranes 21 flows through the permeate-side spacer members 22 and is discharged to the outside of the separation membrane element 1 through the second discharge opening 46 from a 1st end part 11 side of the laminate 10 which side faces the second discharge opening 46 of the container 40. The permeate fluid flowing through the permeate-side spacer members 22 may be discharged to the outside of the separation membrane element 1 not only through the second discharge opening 46 but also through the feed and discharge opening from a 1st end part 11 side of the laminate 10 facing the feed and discharge opening 45 of the container 40. This allows the raw material fluid to be separated into a permeate fluid and a non-permeate fluid.

In a case where the sweep fluid is fed to the separation membrane element 1, the sweep fluid is fed to the 1st end part 11 side of the laminate 10 through the feed and discharge opening 45 of the container 40, so that the sweep fluid is fed to the permeate-side spacer members 22. The sweep fluid flows through the permeate-side spacer members 22 and is discharged to the outside of the separation membrane element 1 through the second discharge opening 46 from the 1st end part 11 side of the laminate 10 which side faces the second discharge opening 46 of the container 40.

When the raw material fluid is fed to the separation membrane element 1, an internal pressure is generated in a feed-side space formed by the feed-side spacer member 23 through which the raw material fluid flows. In a case where a sealing part is provided at a position corresponding to the lamination position of the feed-side spacer member, and the sealing part is provided between separation membranes provided on both surfaces of the feed-side spacer member, the sealing part tends to easily peel from the separation membranes by being affected by the internal pressure. In a case where peeling occurs between the sealing part and the separation membranes, the gas tightness of the sealing part is deteriorated, and it becomes difficult to carry out fluid separation well.

In the separation membrane element 1 in accordance with the present embodiment, however, at the 1st end part 11 of the laminate 10, the end parts of the two permeate-side spacer members 22 between which the membrane laminate part 20 is provided are located further on the outer side than is the end part of the membrane laminate part 20. This allows the first sealing part 31 to be provided at a position that is further on the outer side than the end part of the membrane laminate part 20 and that is between the two permeate-side spacer members 22. In comparison to the above case in which the sealing part is provided between the separation membranes, it is easy to disperse the internal pressure because the first sealing part 31 is formed over a wider area in the lamination direction of the laminate 10. It is therefore possible to improve durability against the internal pressure. This makes it possible to provide the separation membrane element 1 which is excellent in gas tightness exhibited by the first sealing part 31 when fluid separation is carried out.

In the above-described case in which the first sealing part 31 and the second sealing part 32 are bonded to each other at a position of intersection between the 1st end part 11 and the 2nd end part 12, an improvement in adhesion of the first sealing part 31 is achieved at the position of intersection. This makes it even more easy to improve the gas tightness of the first sealing part 31.

The first sealing part 31 and the second sealing part 32 may each be made of a sealing material. The first sealing part 31 and the second sealing part 32 may be adhesive layers independently formed by using an adhesive as a sealing material and drying or curing the adhesive.

The first sealing part 31 can be formed, for example, by (i) applying a sealing material at the 1st end part 11 so as to fill a space formed in a position that is further on the outer side than is the end part of the membrane laminate part 20 and that is between the permeate-side spacer members 22 provided on both sides of the membrane laminate part 20 and (ii) drying or curing the sealing material. At the time of applying the sealing material, the sealing material may be applied to the end part of the membrane laminate part 20 at the 1st end part 11. The sealing material may be caused to impregnate: portions of the separation membrane 21 which portions are located at the end part of the membrane laminate part 20 or portions of the porous membranes included in the separation membranes 21 which portions are located at the end part of the membrane laminate part 20; and the feed-side spacer member 23, and in this state, the sealing material may be dried or cured to form the first sealing part 31.

The second sealing part 32 can be formed, for example, by applying a sealing material to positions corresponding to the lamination positions of the permeate-side spacer members 22 in the lamination direction of the laminate 10 and drying or curing the sealing material. The second sealing part 32 may also be formed by: applying a sealing material to the permeate-side spacer members 22 to let the sealing material impregnate portions of the permeate-side spacer members 22; and in this state, drying or curing the sealing material.

Examples of a resin contained in the adhesive used as a sealing material include an epoxy-based resin, an urethane-based resin, a silicone-based resin, a vinyl chloride copolymer-based resin, a vinyl chloride-vinyl acetate copolymer-based resin, a vinyl chloride -vinylidene chloride copolymer-based resin, a vinyl chloride-acrylonitrile copolymer-based resin, a butadiene-acrylonitrile copolymer-based resin, a polyamide-based resin, a polyvinyl butyral-based resin, a polyester-based resin, a cellulose derivative (nitrocellulose or the like)-based resin, a styrene-butadiene copolymer-based resin, various synthetic rubber-based (elastomer-based) resins, a phenol-based resin, a urea-based resin, a melamine-based resin, a phenoxy-based resin, and a urea formaldehyde-based resin. Among these, the sealing material is preferably an adhesive of an epoxy-based resin (a resin for an epoxy-based adhesive), and more preferably an epoxy-based adhesive of a two-liquid-mixture type.

In a case where both the first sealing part 31 and the second sealing part 32 are adhesive layers, the first sealing part 31 and the second sealing part 32 can be made of the same adhesive or made of respective different adhesives. In a case where the first sealing part 31 and the second sealing part 32 are adhesive layers and, as described above, the first sealing part 31 and the second sealing part 32 are bonded to each other at the position of intersection, it is preferable that the first sealing part 31 and the second sealing part 32 be adhesive layers made of the same adhesive.

When a specimen prepared by being cut out from the laminate 10 so as to include the first sealing part 31 of the separation membrane element 1 is subjected to a T-peel test which causes peeling between the separation membranes 21 and the feed-side spacer member 23, the specimen preferably exhibits a peel strength of not less than 15.0 MPa. The peel strength is more preferably not less than 16.0 MPa and even more preferably not less than 20.0 MPa, can be not less than 25.0 MPa, and is ordinarily not more than 40.0 MPa. In a case where the peel strength is within the above ranges, it is possible to improve durability of the first sealing part 31 against an internal pressure generated in the feed-side spacer member 23.

The above peel strength is a peel strength exhibited in a case where the T-peel test is conducted under a temperature condition of 25°C. The specimen is prepared by being cut out so as to include not less than 10% of the membrane leaf included in the laminate 10. The specific procedure of a method for measuring the peel strength will be described in Examples (described later).

In the laminate 10 illustrated in Fig. 2, at the 1st end part 11, the end parts of the two permeate-side spacer members 22 provided between on both sides of the membrane laminate part 20 are located further on the outer side than is the end part of the membrane laminate part 20. However, the laminate in accordance with an embodiment of the present invention is not limited to this. It is only necessary that, in a plan view of the laminate 10, end parts of the separation functional layers at the 1st end part 11, which separation functional layers are provided between the two permeate-side spacer members 22, be located further on the outer side than are the end parts of the separation functional layers. For example, in a plan view of the laminate 10, the end parts of the two permeate-side spacer members 22 at the 1st end part 11 may be located at a position that is (i) further on the outer side than are the end parts of the separation membranes 21 (the separation functional layers and the porous membranes) and (ii) identical to the position of the end part of the feed-side spacer member 23 provided between the two permeate-side spacer members 22. Alternatively, in a plan view of the laminate 10, the end parts of the two permeate-side spacer members 22 at the 1st end part 11 may be located at a position that is (i) further on the outer side than is the end part of the feed-side spacer member 23 provided between the two permeate-side spacer members 22 and (ii) identical to the position of the end parts of the porous membranes included in the separation membranes 21. In a case where, in a plan view of the laminate 10, the end parts of the two permeate-side spacer members 22 at the 1st end part 11 are located at a position identical to the position of the porous membranes and/or the end part of the feed-side spacer member 23, the first sealing part 31 may include part (e.g., end parts) of the porous membranes and/or part (e.g., an end part) of the feed-side spacer member 23.

The separation membrane element 1 is capable of separating a specific fluid component from the raw material fluid which contains at least the specific fluid component. The raw material fluid, the specific fluid component, the permeate fluid, the non-permeate fluid, and the sweep fluid may each independently gas or liquid. The separation membrane element 1 is preferably a gas separation membrane element, and it is preferable that the separation membrane element 1 selectively causes a specific gas component out of a raw material gas to permeate through the separation membrane element 1. The specific gas component is preferably an acidic gas. Examples of the acidic gas include carbon dioxide (CO₂), hydrogen sulfide (H₂S), a sulfur oxide (SOₓ), and a nitrogen oxide (NOₓ). The specific gas component is preferably carbon dioxide or hydrogen sulfide and more preferably carbon dioxide. Examples of the raw material gas include a gas containing an acid gas such as: a remaining exhaust gas of syngas synthesized at a plant manufacturing hydrogen, urea, or the like; natural gas; biogas; and combustion exhaust gas.

### (Method for producing separation membrane element)

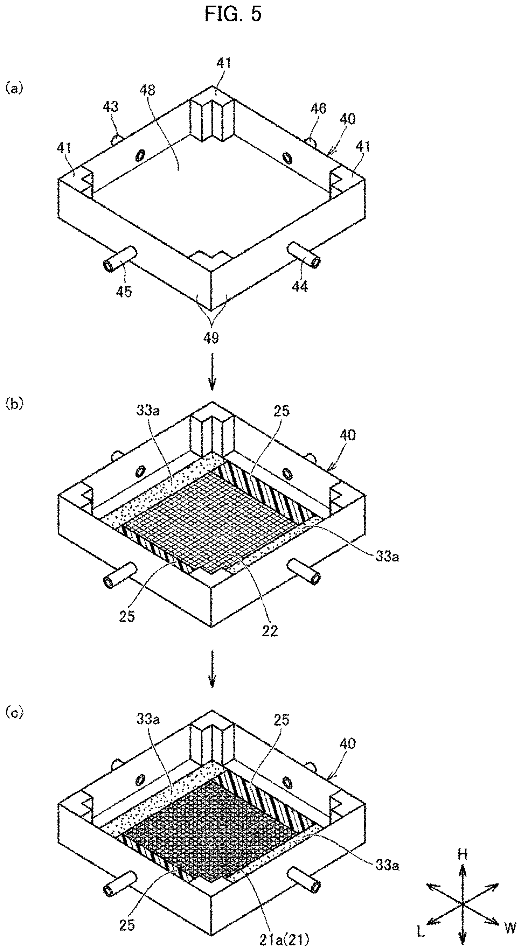

Figs. 5 to 7 are perspective views illustrating a production process for producing the separation membrane element in accordance with an embodiment of the present invention. In Figs. 5 to 7, L represents a longitudinal direction of the container, W represents a width direction of the container, and H represents a height direction of the container.

The separation membrane element 1 can be produced with use of the container 40, the separation membranes 21, the permeate-side spacer members 22, and the feed-side spacer member 23 by stacking, in a housing space of the container 40, the permeate-side spacer members 22, the separation membranes 21, and the feed-side spacer member 23 to form the laminate 10. The following description will discuss an example of a method for producing a separation membrane element 1 that is obtained by housing, in a container 40 that has a prism shape, a laminate 10 that has a rectangular shape in a plan view.

First, the container 40 is prepared. The container 40 illustrated in (a) of Fig. 5 has a housing space for housing members included in the laminate 10, the container 40 being in a state where a top face of the container 40 is open. The container 40 can include a guide part 41 for positioning a member housed in the housing space. In a case where the housing space of the container 40 has a prism shape, it is preferable that the guide part 41 be provided at corners of the container 40 ((a) of Fig. 5).

The first tape 25 for preventing a sealing material from seeping in is stuck onto both surfaces of a permeate-side spacer member 22 at an end part that is to be the 1st end part 11 of the laminate 10 (Fig. 3). The permeate-side spacer member 22 illustrated in Fig. 5 has the first tape 25 attached at end parts extending along two sides opposite to each other ((b) of Fig. 5). The permeate-side spacer member 22 on which the first tape 25 is stuck is placed in the container 40 such that the sides to which the first tape 25 is attached are parallel to sides that extend parallel to the width direction W. Then, a sealing material 33a is applied along end parts (end parts of the permeate-side spacer member 22 to which end parts the first tape 25 has not been attached (end parts extending parallel to the longitudinal direction L)) that are to be the 2nd end part 12 of the laminate 10 ((b) of Fig. 5). In a plan view of the container 40, the sealing material 33a may be applied to positions that are further on the outer side than are the end parts of the permeate-side spacer member 22, or may be applied so as to cover the end parts.

Subsequently, a separation membrane 21 (may hereinafter be referred to as "first separation membrane 21a") is placed on top of the permeate-side spacer member 22 ((c) of Fig. 5). At this time, the first separation membrane 21a is placed such that, at the end parts (the end parts extending parallel to the width direction W) to be the 1st end part 11 of the laminate 10, the end parts of the permeate-side spacer member 22 are located further on the outer side than are end parts of the first separation membrane 21a in a plan view of the laminate 10 ((c) of Fig. 5). For example, the first separation membrane 21a is placed so as not to cover the first tape 25 on the permeate-side spacer member 22. At the end parts (the end parts extending parallel to the longitudinal direction L) to be the 2nd end part 12 of the laminate 10, the end parts of the permeate-side spacer member 22 may be located further on the outer side than are end parts of the first separation membrane 21a in a plan view of the laminate 10, or may be located at positions identical to the positions of the end parts of the first separation membrane 21a.

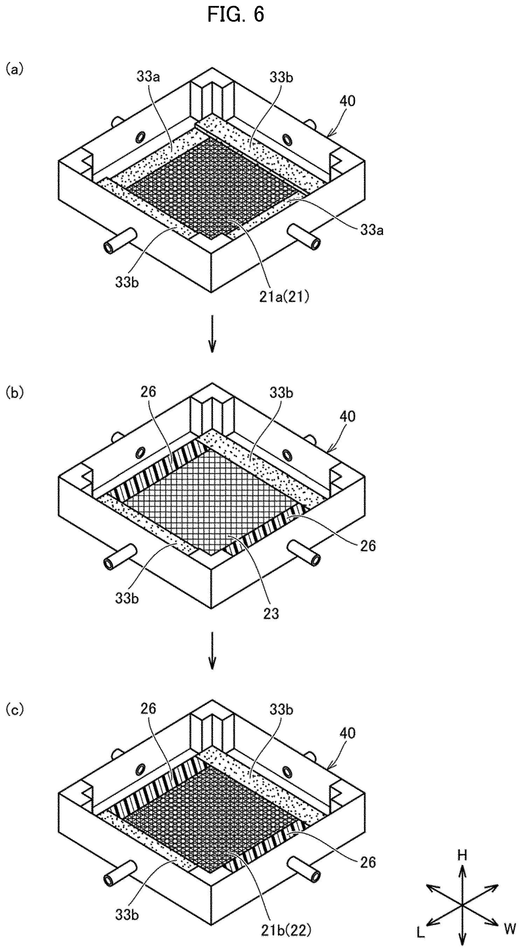

Then, a sealing material 33b is applied to the end parts that are to be the 1st end part 11 of the laminate 10 ((a) of Fig. 6). For example, the sealing material 33b is applied so as to cover the entire end parts of the permeate-side spacer member 22 which end parts are located further on the outer side than are the end parts of the first separation membrane 21a in a plan view of the laminate 10. (a) of Fig. 6 illustrates a case in which the sealing material 33b is applied onto the first tape 25 on the permeate-side spacer member 22. The sealing material 33b is applied such that both ends (both ends in the width direction W) of coatings of the sealing material 33b applied overlap with both ends (both ends in the longitudinal direction L) of coatings of the sealing material 33a).

Subsequently, the second tape 26 for preventing a sealing material from seeping in is stuck onto both surfaces of the feed-side spacer member 23 at the end parts that are to be the 2nd end part 12 of the laminate 10 (Fig. 4). The feed-side spacer member 23 on which the second tape 26 is stuck is placed on top of the first separation membrane 21a in the container 40 ((b) of Fig. 6). The feed-side spacer member 23 is placed on top of the first separation membrane 21a such that the sides on which the second tape 26 is attached are parallel to the sides extending parallel to the longitudinal direction L. At this time, the feed-side spacer member 23 is placed such that, at the end parts (the end parts extending parallel to the width direction W) to be the 1st end part 11 of the laminate 10, the end parts of the permeate-side spacer member 22 are located further on the outer side than are end parts of the feed-side spacer member 23 in a plan view of the laminate 10 ((b) of Fig. 6). In (b) of Fig. 6, the feed-side spacer member 23 is placed so as not to overlap with the coatings of the sealing material 33b applied on the permeate-side spacer member 22.

Then, a separation membrane 21 (may hereinafter be referred to as "second separation membrane 21b") is further placed on top of the feed-side spacer member 23 in the container 40. At this time, the second separation membrane 21b is placed such that, at the end parts (the end parts extending parallel to the width direction W) to be the 1st end part 11 of the laminate 10, the end parts of the permeate-side spacer member 22 are located further on the outer side than are end parts of the second separation membrane 21b in a plan view of the laminate 10 ((c) of Fig. 6). At the end parts (the end parts extending parallel to the longitudinal direction L) to be the 2nd end part 12 of the laminate 10, the end parts of the permeate-side spacer member 22 may be located further on the outer side than are end parts of the second separation membrane 21b in a plan view of the laminate 10, or may be located at positions identical to the positions of the end parts of the second separation membrane 21b. Subsequently, a sealing material is applied to the end parts that are to be the 2nd end part 12 of the laminate 10. It is preferable that the sealing material be applied to portions that coincide positionally with the coatings of the sealing material 33a previously applied, with the feed-side spacer member 23 interposed therebetween. Thus, the first separation membrane 21a, the feed-side spacer member 23, and the second separation membrane 21b stacked on top of the permeate-side spacer member 22 constitute the membrane laminate part 20.

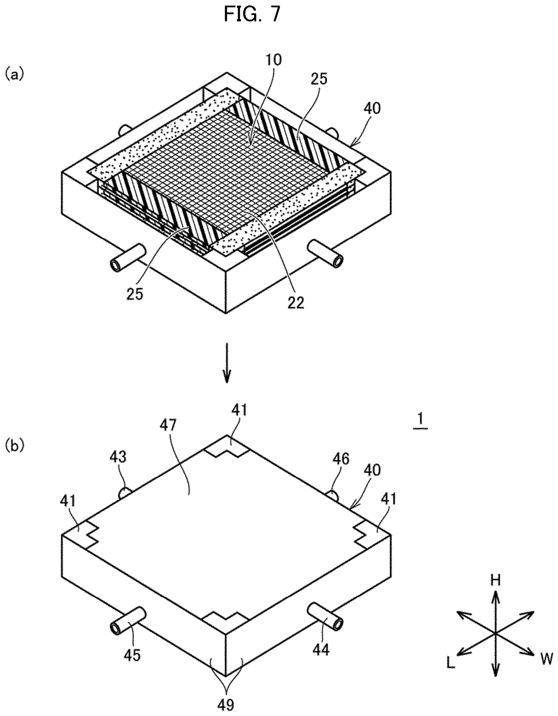

Next, a permeate-side spacer member 22 is further placed on top of the second separation membrane 21b in the container 40. This permeate-side spacer member 22 is placed on top of the second separation membrane 21b such that, at the end parts (the end parts extending parallel to the width direction W) to be the 1st end part 11 of the laminate 10, end parts of the permeate-side spacer member 22 are located further on the outer side than are end parts of the membrane laminate part 20 in a plan view of the laminate 10. The membrane laminate part 20 (the first separation membrane 21a, the feed-side spacer member 23, and the second separation membrane 21b) and the permeate-side spacer member 22 placed on top of the membrane laminate part 20 constitute a membrane leaf. By repeating a step of placing a membrane leaf on top in accordance with the above-described procedure, the laminate 10 is formed in the container 40 ((a) of Fig. 7).

After the laminate 10 is formed in the container 40, a gap between the guide part 41 of the container 40 and the laminate 10 is sealed with use of a sealing material. Subsequently, at the 2nd end part 12 of the laminate 10, a sealing material is applied onto a permeate-side spacer member 22 included in a membrane leaf at the topmost face of the laminate 10. An upper lid which serves as a top face part 47 of the container 40 is installed ((b) of Fig. 7), and a sealing material is applied to a gap between the upper lid and the side wall parts 49 of the container 40. Then, the sealing material is dried or cured. This allows the separation membrane element 1 to be obtained ((b) of Fig. 7).

In the production method described above, two second separation membranes (the first separation membrane 21a and the second separation membrane 21b) are used in order to form the membrane laminate part 20. Alternatively, the membrane laminate part 20 may be formed by folding a single separation membrane in half and sandwiching the feed-side spacer member 23 between the halves of the folded separation membrane. In a case of using the separation membrane folded in half, the folded portion may be provided at an end part that is to be the 1st end part 11 of the laminate 10. In the separation membrane element 1 illustrated in (b) of Fig. 7, the folded portion is preferably positioned so as to communicate with a side of the container 40 which side has the second discharge opening 46 for discharging the permeate fluid. In this case, it is not necessary to provide the first sealing part at the 1st end part 11 at which the folded portion of the separation membrane is provided.

### (Separation device)

A separation device can have at least one separation membrane element. The positional arrangement and number of separation membrane elements included in the separation device can be selected as appropriate in accordance with a required amount of treatment, a recovery ratio of the specific fluid component, a size of a location in which the separation device is installed, and the like.

The separation device can include: a first feed part and a first discharge part each of which communicates with the feed-side spacer member(s) 23 of the separation membrane element 1; and a second discharge part which communicates with the permeate-side spacer members 22 of the separation membrane element 1. The separation device can further include a feed and discharge part which communicates with the permeate-side spacer members 22 of the separation membrane element.

The first feed part is an inlet for feeding the raw material fluid to the feed-side spacer member(s) and can communicate with the first feed opening 43 of the separation membrane element 1. The first discharge part is an outlet for discharging the non-permeate fluid flowing through the feed-side spacer member(s) and can communicate with the first discharge opening 44 of the separation membrane element 1. The second discharge part is an outlet for discharging the permeate fluid flowing through the permeate-side spacer members and can communicate with the second discharge opening 46 of the separation membrane element 1. The feed and discharge part can be used as a second feed part which is an inlet for feeding the sweep fluid to the permeate-side spacer members or as a third discharge part for discharging the permeate fluid. The feed and discharge part can communicate with the feed and discharge opening 45 of the separation membrane element 1.

The following description will discuss, in further details, the members included in the separation membrane element 1 and the separation device.

### (Container)

The container 40 houses therein the laminate 10. As illustrated in Fig. 1, the container 40 includes: the top face part 47; a bottom face part 48; and the side wall parts 49 connecting the top face part 47 and the bottom face part 48 to each other, and a housing space can be defined by the top face part 47, the bottom face part 48, and the side wall parts 49. The top face part 47 and the bottom face part 48 extend in a direction orthogonal to the lamination direction of the laminate 10, and the side wall parts 49 extend in the lamination direction of the laminate. A shape of the container is not particularly limited. The top face part 47 and the bottom face part 48 may each be in a shape of a polygon such as a rectangle, or may each be in a shape of a circle. The side wall parts 49 may be in a prism shape or may be in a cylindrical shape.

The container 40 can include the guide part 41 for positioning members included in the laminate 10, as illustrated in (a) of Fig. 5. In a case where the side wall parts 49 of the container 40 are in a prism shape, the guide part 41 is preferably provided at corners of the side wall parts 49.

The first feed opening 43, the feed and discharge opening 45, the first discharge opening 44, and the second discharge opening 46 of the container 40 may be provided in the side wall parts 49 of the container 40, or may be provided in the top face part 47 or the bottom face part 48.

Each of the members included in the container 40 can be made of a resin, glass, a metal, a ceramic, or the like. Examples of the resin include: a resin such as a polycarbonate, an acrylic resin, a fluororesin, polybutylene succinate (PBS), polyethylene terephthalate (PET), vinyl chloride (PVC), polystyrene (PS), an acrylnitrile butadiene styrene copolymer (ABS), polyphenylene sulfide (PPS), a polyether sulfone (PES), a polysulfone (PSF), polyacrylonitrile (PAN), polyphenylene oxide (PPO), a polyamide (PA), a polyimide (PI), polyetherimide (PEI), polyether ether ketone (PEEK), and polypropylene (PP); and a fiber-reinforced resin obtained by mixing any of these resins with a fiber such as glass. Examples of the metal include a stainless steel such as SUS, aluminum, and copper. The members included in the container 40 may be made of the same material or respective different materials.

### (Separation membranes)

The separation membranes 21 are not particularly limited, provided that the separation membranes 21 are each a known separation membrane capable of selectively allowing a specific fluid component out of the raw material fluid to permeate therethrough. For example, the separation membranes 21 can each be an ultrafilter, a nanofilter, a reverse osmosis membrane, a dialysis membrane, a forward osmosis membrane, a dissolution-diffusion membrane, a facilitated transport membrane, or the like. The dissolution-diffusion membrane is a membrane which utilizes differences in solubility and diffusivity among molecules of a fluid and selectively causes molecules to permeate through the membrane. The facilitated transport membrane is a membrane which contains a substance that promotes solubility and/or diffusivity of the molecules of a fluid. The separation membranes 21 are each preferably a dissolution-diffusion membrane.

The separation membranes 21 can each include a porous membrane and a separation functional layer. The number of layers of the porous membrane included in a separation membrane 21 only needs to be one or more, and can be two or more, or three or more. The porous membrane can be provided on one surface or both surfaces of the separation functional layer. The number of layers of the porous membrane provided on one surface or both surfaces of the separation functional layer can be one, or can be two or more.

In a case where a separation membrane includes a porous membrane only on one surface thereof, the membrane laminate part 20 preferably has the separation membranes 21 and the feed-side spacer member 23 stacked such that the separation functional layer sides of the separation membranes 21 face the feed-side spacer member 23.

### (Separation functional layer)

The separation functional layer can be selected in accordance with the above-described membrane type. The separation functional layer is preferably a layer formed with use of a composition containing a resin. Examples of the resin include polyacrylic acid, a polyamide, cellulose acetate, a polysulfone, a polyether sulfone, vinylidene fluoride, polyacrylonitrile, a polyvinyl chloride-polyacrylonitrile copolymer, an epoxy resin, a polyimide, polyvinyl alcohol, a polysiloxane, a polyether block amide copolymer, and polyethylene oxide. The polyacrylic acid may be crosslinked polyacrylic acid which has been subjected to crosslinking, or may be non-crosslinked polyacrylic acid which has not been subjected to crosslinking.

The separation functional layer may be a gel layer. The gel layer may contain a hydrophilic resin such as polyacrylic acid, and further contain an amino acid, aminosulfonic acid, aminophosphonic acid, and/or the like. The gel layer can include a surfactant for adjusting wettability with respect to the porous membrane. In a case where the specific fluid component is gas, the gel layer may further contain an alkali metal compound and/or a hydration reaction catalyst for improving a speed of a reaction between the specific fluid component and the alkali metal compound.

The separation functional layer can be produced, for example, by applying, onto the porous membrane, a coating solution containing the above-described resin and a medium. Examples of a method for applying the coating solution onto the porous membrane include slot die coating, a spin coating method, bar coating, a die coating method, blade coating, air-knife coating, a gravure coating method, roll coating, spray coating, dip coating, a comma roller method, a kiss coating method, screen printing, and inkjet printing.

### (Porous membrane)

The porous membrane can be a support layer for supporting the separation functional layer, or can be a protective layer for protecting the separation functional layer. The porous membrane can be in direct contact with the separation functional layer. The porous membrane preferably has porosity with a high fluid component permeability, so as not to act as a resister against diffusion of the raw material fluid fed to the separation functional layer or the specific fluid component contained in the raw material fluid.

The porous membrane is preferably made of a resin material or an inorganic material. Examples of the resin material of which the porous membrane is made include: a polyolefin-based resin such as polyethylene (PE) and polypropylene (PP); a fluorine-containing resin such as polytetrafluoroethylene (PTFE), polyvinyl fluoride (PVF), and polyvinylidene fluoride (PVDF); a polyester resin such as polyethylene terephthalate (PET) and polyethylene naphthalate; polystyrene (PS), a polyether sulfone (PES), polyphenylene sulfide (PPS), a polysulfone (PSF), polyacrylonitrile (PAN), polyphenylene oxide (PPO), a polyamide (PA), a polyimide (PI), polyetherimide (PEI), polyether ether ketone (PEEK), a high molecular weight polyester, a heat resistant polyamide, an aramid, a polycarbonate, and a mixture of two or more of these resin materials. Among these, from the perspective of water repellency and heat resistance, the resin material preferably contains at least one selected from the group consisting of the polyolefin-based resin and the fluorine-containing resin, and more preferably contains one or more selected from the group consisting of polyethylene, polypropylene, and polytetrafluoroethylene. Examples of the inorganic material of which the porous membrane is made include a metal, glass, and a ceramic.

The porous membrane is not particularly limited, provided that it is a porous body. The porous membrane can be a porous body in the form of a sheet, such as a porous resin film, a nonwoven fabric, a woven fabric, a foamed product, a mesh and a net.

The porous membrane included in a separation membrane can be, for example, one or more layers of a porous resin film stacked on one side of the separation functional layer and one or more layers of a nonwoven fabric stacked on the other side of the separation functional layer.

### (Feed-side spacer member and permeate-side spacer members)

The feed-side spacer member 23 and the permeate-side spacer members 22 each preferably have (i) a function of facilitating a turbulent flow (front surface renewal of a membrane surface) of the raw material fluid or the permeate fluid, which has permeated through the separation membranes 21, to increase the speed of membrane permeation of the permeate fluid included in the raw material fluid and (ii) a function of minimizing a pressure drop in the permeate fluid which has permeated through the separation membranes 21. The feed-side spacer member 23 and the permeate-side spacer members 22 each preferably have a function as a spacer for forming a channel for the raw material fluid and the permeate fluid and a function of causing a turbulent flow of the raw material fluid and the permeate fluid. As such, the feed-side spacer member 23 and the permeate-side spacer members 22 each preferably have a net-like shape, a mesh-like shape, or the like. A shape of a unit cell of the mesh or the net is preferably selected from the group consisting of, for example, a square, a rectangle, an rhombus, a parallelogram, and the like in accordance with the purpose, because the channels of the fluids change depending on the shape of the mesh or the net. A material of each of the feed-side spacer member 23 and the permeate-side spacer members 22 is not particularly limited, but is preferably a heat resistant material that is capable of withstanding a temperature condition under which the separation device in which the separation membrane element 1 is provided is operated. The feed-side spacer member 23 and the permeate-side spacer members 22 can each independently have a single-layer structure or a multi-layer structure. The feed-side spacer member 23 and the permeate-side spacer members 22 each having a multi-layer structure each preferably have a structure in which net-like/mesh-like layers of one or more types are stacked, and the net-like/mesh-like layers stacked may have respective different net-like/mesh-like structures.

### (First tape and second tape)

The first tape 25 and the second tape 26 are each a tape used for preventing seepage of a sealing material. The first tape 25 and the second tape 26 can each be made of a material that is impermeable with respect to the sealing material. Examples of the material include polypropylene, a polyimide, polytetrafluoroethylene, a glass fiber, and a polyester. The first tape 25 and the second tape 26 can be made of the same material or respective different materials. The first tape and the second tape is used at the time of production of the separation membrane element, and can be removed or remain when the separation membrane element is used.

### [Examples]

### [Example 1]

### (Preparation of coating solution (1))

152.75 parts by weight of water, 0.73 parts by weight of non-crosslinked polyacrylic acid (PAA) (AQUPAANA "AP-40F" manufactured by Sumitomo Seika Chemicals Co., Ltd.), 3.67 parts by weight of crosslinked polyacrylic acid (AQUPEC "HV-501E" manufactured by Sumitomo Seika Chemicals Co., Ltd.), 34.84 parts by weight of a 50 wt% aqueous solution of cesium hydroxide (manufactured by SigmaArdrich) serving as an alkali metal, and 8.01 parts by weight of sarcosine (manufactured by Tokyo Chemical Industry Co., Ltd.) serving as an amino acid were added and mixed to obtain a mixed solution. The obtained mixed solution was defoamed with use of a defoaming device (a planetary centrifugal mixer AWATORI RENTARO ARE-310 manufactured by Thinky Corporation) to obtain a coating solution (1).

### (Preparation of separation membrane (1))

As a porous membrane, a polytetrafluoroethylene (PTFE) porous membrane (POREFLON "HP-010-50" manufactured by Sumitomo Electric Fine Polymer, Inc.) was prepared. With use of corona surface modification test equipment (TEC-4AX, manufactured by Kasuga Electric Works Ltd., treatment electrode width: 21 cm), one surface of the porous membrane was subjected to a corona treatment.

The corona-treated surface of the porous membrane was coated with the coating solution (1) with use of a desktop applicator to form a coating film having a thickness of 50 µm immediately after the coating solution (1) was dried. Another porous membrane was placed on the coating film. This porous membrane was placed such that its corona-treated surface faced the coating film. Subsequently, drying was carried out at a temperature of 100°C for 30 minutes to obtain a separation membrane (1) which had a length of 100 mm and a width of 100 mm and in which a porous membrane, a separation functional layer, and a porous membrane were stacked in this order.

### (Preparation of permeate-side spacer member (1))

Prepared was a structure in which a polypropylene mesh (manufactured by Innovex Co., Ltd., product name: 25-250PPN) was placed between two polypropylene meshes (manufactured by Innovex Co., Ltd., product name: 50-150PPN). In a plan view, the structure had a size of 120 mm in length and 100 mm in width. A first tape (manufactured by 3M, product name: 3042) for preventing seepage of a sealing material was cut out in a size of 100 mm in length and 20 mm in width. The first tape was stuck on both surfaces of each of (two) end parts of the structure which end parts were parallel to a width direction of the structure. Thus obtained was a permeate-side spacer member (1). The first tape was attached such that: a side of the first tape extending in a length direction of the first tape was parallel to the width direction of the structure; and the first tape covered the entire end parts of the structure in the width direction.

### (Preparation of feed-side spacer member (1))

A polypropylene diamond net (manufactured by SWM, product name: No. 1716) was prepared. In a plan view, the net had a size of 120 mm in length and 100 mm in width. A second tape (manufactured by 3M, product name: 3042) for preventing seepage of the sealing material was cut out in a size of 100 mm in length and 20 mm in width. The second tape was stuck on both surfaces of each of (two) end parts of the net which end parts were parallel to a width direction of the net. Thus obtained was a feed-side spacer member (1). The second tape was attached such that: a longitudinal direction of the second tape was parallel to the width direction of the net; and the second tape covered the entire end parts of the net in the width direction.

### (Preparation of container)

A container (made of a polycarbonate) having external dimensions of 150 mm in length, 150 mm in width, and 100 mm in height was prepared. At the four corners of the container, a guide part was provided. Each adjacent guide parts had a distance of 120 mm therebetween. Side wall parts of the container had a first feed opening, a second feed opening, a first discharge opening, and a second discharge opening provided therein, respectively.

### (Preparation of sealing material)

As the sealing material, an adhesive (an epoxy-based adhesive of a two-liquid-mixture type, manufactured by Henkel (U.S.), product name: EA E-90FL) was prepared.

### (Preparation of separation membrane element (1))

As illustrated in Figs. 5 to 7, a separation membrane element (1) was prepared in the following procedure. First, the permeate-side spacer member (1) was placed in a housing space of the container such that a longitudinal direction L of the container was parallel to a longitudinal direction of the permeate-side spacer member (1). Subsequently, along end parts (end parts parallel to the longitudinal direction L of the container) (2nd end part) of the permeate-side spacer member (1) which parts extended along the longitudinal direction L of the container, the sealing material was applied to outer sides of the end parts in a plan view.

Next, at end parts (1st end part) parallel to a width direction W of the container, the separation membrane (1) was placed on top of the permeate-side spacer member (1) in the container such that, at end parts (1st end part) parallel to the width direction W of the container, in a plan view, end parts of the permeate-side spacer member (1) were further on an outer side than are end parts of the separation membrane (1), and the separation membrane (1) dis not overlap with the sealing material in the container Then, at the end parts (1st end part) parallel to the width direction W of the container, the sealing material was applied to the end parts (first tape) of the permeate-side spacer member (1) which end parts were located further on the outer side than are the end parts of the separation membrane (1) in a plan view. At this time, the sealing material was applied such that both ends of the sealing material applied overlapped with the sealing material previously applied along the end parts of the permeate-side spacer member (1) which end parts extended along the longitudinal direction L of the container.

Subsequently, the feed-side spacer member (1) was placed on top of the separation membrane (1) in the container such that the longitudinal direction L of the container was parallel to a width direction of the feed-side spacer member (1). The feed-side spacer member (1) was placed on top of the separation membrane (1) such that: the portions to which the second tape was attached overlapped with the sealing material applied along the longitudinal direction L of the container; and the feed-side spacer member (1) did not feed-side spacer member (1) did not overlap with the sealing material applied to the end parts (1st end part) parallel to the width direction W of the container. Then, another separation membrane (1) was placed on top of the feed-side spacer member (1) so as not to overlap with the sealing material applied to the end parts (1st end part) parallel to the width direction W of the container. Thus, a membrane laminate part (1), which had the separation membrane (1), the feed-side spacer member (1), and the separation membrane (1) in this order, was placed on top of the permeate-side spacer member (1).

Subsequently, along end parts (2nd end part) of the separation membrane (1) located at the topmost face of the membrane laminate part (1) obtained above, which end parts were parallel to the longitudinal direction L of the container, the sealing material was applied onto the end parts of the separation membrane (1). Then, another permeate-side spacer member (1) was placed on top. At this time, the feed-side spacer member (1) was placed such that end parts (first tape) of the permeate-side spacer member (1) overlapped with the sealing material applied to the end parts (1st end part) parallel to the width direction W of the container. Thus, a membrane leaf constituted by the membrane laminate part (1) and this permeate-side spacer member (1) was formed. On top of this membrane leaf, a membrane leaf was placed in accordance with the procedure described above to prepare a laminate (1) in which a total of ten membrane leaves were stacked. The laminate (1) had a 2nd end part which was end parts parallel to the longitudinal direction L of the container, and a 1st end part which was end parts parallel to the width direction W of the container.

A gap between each guide part and the laminate (1) in the container was sealed with use of the above-described sealing material. Subsequently, the sealing material was applied along end parts (2nd end part) of the permeate-side spacer member (1) included in the membrane leaf at the topmost face which end parts were parallel to the longitudinal direction L of the container, and an upper lid of the container was installed. Then, a gap between the upper lid and the housing space of the container was sealed with use of the sealing material. Subsequently, drying was carried out for 10 hours under a temperature condition of 65°C to cure the sealing material. Thus prepared was the separation membrane element (1). The separation functional layer of the separation membrane element (1) had an effective area of 0.02 m². At the 1st end part (end parts parallel to the width direction W of the container) of the laminate (1), (i) the end parts of the permeate-side spacer members (1) were located further on the outer side than were the end parts of the membrane laminate part (1) in a plan view of the laminate (1), (ii) a first sealing part was formed by the sealing material that filled a space formed by the end parts of the membrane laminate part (1) and the end parts of the permeate-side spacer members (1), and (iii) the permeate-side spacer members (1) on both surfaces of the membrane laminate part (1) were bonded to each other by the first sealing part. At the 2nd end part (end parts parallel to the longitudinal direction L of the container) of the laminate (1), a second sealing part was formed at positions corresponding to the lamination positions of the permeate-side spacer members (1) in the lamination direction of the laminate.

### [Example 2]

A separation membrane element (2) was prepared in accordance with the procedure described in the preparation of the separation membrane element (1), except that an adhesive (an epoxy-based adhesive of a two-liquid-mixture type, manufactured by Aremco, product name: AR2310) was used as the sealing material.

### [Example 3]

A separation membrane element (3) was prepared in accordance with the procedure described in the preparation of the separation membrane element (1), except that an adhesive (an epoxy-based adhesive of a two-liquid-mixture type, manufactured by ThreeBond Holdings Co., Ltd., product name: TB2230) was used as the sealing material.

### [Comparative Example 1]

### (Preparation of separation membrane (C1))

A separation membrane (C1) was prepared in accordance with the procedure described in the preparation of the separation membrane (1), except that the membrane (C1) had a size of 120 mm in length and 120 mm in width.

### (Preparation of permeate-side spacer member (C1))

A permeate-side spacer member (C1) was prepared in accordance with the procedure described in the preparation of the permeate-side spacer member (1), except that the permeate-side spacer member (C1) had a size of 120 mm in length and 120 mm in width and did not have a first tape attached thereto.

### (Preparation of feed-side spacer member (C1))

A feed-side spacer member (C1) was prepared in accordance with the procedure described in the preparation of the feed-side spacer member (1), except that the feed-side spacer member (C1) had a size of 120 mm in length and 120 mm in width and did not have a second tape attached thereto.

### (Preparation of sealing material)

The adhesive used in Example 1 was prepared as the sealing material.

### (Preparation of separation membrane sheet (C1))

The container used in Examples was prepared. The permeate-side spacer member (C1) was put in a housing space of the container, and the sealing material used in Example 1 was applied on end parts of the permeate-side spacer member (C1) along end parts (2'nd end part) parallel to a longitudinal direction L of the container. Next, the separation membrane (C1) was placed on top of the permeate-side spacer member (C1) thus coated with the sealing material, and the sealing material was applied onto end parts (1'st end part) parallel to a width direction W of the container. On top of the separation membrane (C1) thus coated with the sealing material, the feed-side spacer member (2) was placed, and another separation membrane (C1) was placed on top. Thus, a membrane laminate part (C1), which had the separation membrane (C1), the feed-side spacer member (C1), and the separation membrane (C1) in this order, was placed on top of the permeate-side spacer member (C1).

Subsequently, along end parts (2'nd end part) of the separation membrane (C1) located at the topmost face of the membrane laminate part (C1) obtained above, which end parts were parallel to the longitudinal direction L of the container, the sealing material was applied onto the end parts of the separation membrane (C1). Then, another permeate-side spacer member (C1) was placed on top. Thus formed was a membrane leaf constituted by the membrane laminate part (C1) and this permeate-side spacer member (C1). On top of this membrane leaf, a membrane leaf was placed in accordance with the procedure described above to prepare a laminate (C1) in which a total of ten membrane leaves were stacked. End parts of the laminate (C1) which end parts were parallel to the longitudinal direction L of the container were regarded as a 2'nd end part, and end parts of the laminate (C1) which end parts were parallel to the width direction W of the container were regarded as a 1'st end part.

A separation membrane element (C1) was prepared in accordance with the procedure described in the preparation of the separation membrane element (1), except that the laminate (C1) formed in the housing space of the container as described above was used. A separation functional layer of the separation membrane element (C1) had an effective area of 0.02 m². At the 1'st end part of the laminate (C1), end parts of the permeate-side spacer members (C1), end parts of the separation membranes (C1), and end parts of the feed-side spacer member (C1) were located at the same positions. At the 1'st end part (end parts parallel to the width direction W of the container), (i) a sealing part was formed by curing the sealing material in a state where the sealing material permeated the end parts of the feed-side spacer member (2), (ii) the sealing part was formed in a state where the sealing material that had permeated the end parts of the feed-side spacer member (C1) was cured, and (iii) the separation membranes (C1) on both sides (both surfaces) of the feed-side spacer member (C1) were bonded to each other by the sealing part. At the 2'nd end part (end parts parallel to the longitudinal direction L of the container) of the laminate (2), sealing parts were formed in a lamination direction of the laminate by curing the sealing material in a state where the sealing material impregnated the end parts of the permeate-side spacer members (1).

### [Comparative Example 2]

A separation membrane element (C2) was prepared in accordance with the procedure described in the preparation of the separation membrane element (C1), except that an adhesive (an epoxy-based adhesive of a two-liquid-mixture type, manufactured by Aremco, product name: AR2310) was used as the sealing material.

### [Comparative Example 3]

A separation membrane element (C3) was prepared in accordance with the procedure described in the preparation of the separation membrane element (C1), except that an adhesive (an epoxy-based adhesive of a two-liquid-mixture type, manufactured by ThreeBond Holdings Co., Ltd., product name: TB2230) was used as the sealing material.

### [Measurement of peel strength]

The laminates were taken out of the containers of the separation membrane elements obtained in Examples and Comparative Examples. From each of the laminates taken out, three specimens were cut out such that each of the three specimens included: three membrane leaves; and a sealing part at the 1st end part or the 1'st end part (end parts parallel to the width direction W of the container). Each specimen was cut out so as to include the sealing part in a size of 100 mm×30 mm, by cutting the specimen such that the specimen was 30 mm in width in the width direction W of the container and 100 mm in length as measured inward in the longitudinal direction L of the container from the 1st end part or the 1'st end part in a plan view of the laminate. The three specimens were subjected to a T-peel test with use of a texture analyzer (TA.XT/plus, manufactured by EKO Instrument) under a temperature condition of 25°C. In the T-peel test, the feed-side spacer member was secured to a clip at a side of each specimen opposite to a 1st end part side or a 1'st end part side of the specimen, and the separation membrane was peeled at a peeling speed of 10 mm/min and to measure a maximum load [N]. For each specimen, a value obtained by dividing the obtained maximum load by a measurement width (30 mm) was calculated, and the values thus obtained were averaged. The average was regarded as a peel strength [N/mm] of the specimens. Results are shown in Table 1.

### [Gas leakage test]

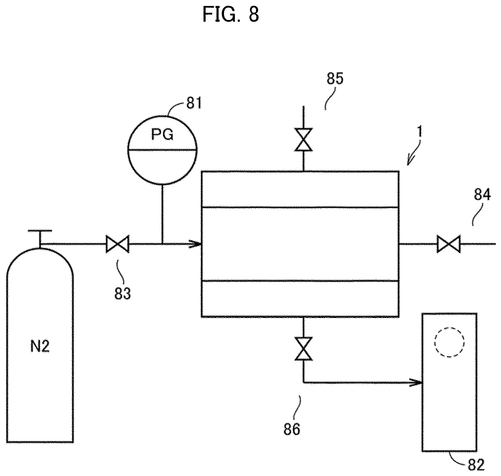

The separation membrane elements obtained in Examples and Comparative Examples were subjected to a gas leakage test. Fig. 8 is a schematic view illustrating a test device for a gas leakage test carried out in Examples. Two end parts (the 2nd end part of Examples and the 2'nd end part of Comparative Examples) parallel to the longitudinal direction L of the separation membrane element 1 were respectively regarded as a feed part 83 communicating with the first feed opening 43 ((b) of Fig. 7) and a discharge part 84 communicating with the first discharge opening 44 ((b) of Fig. 7). Two end parts (the 1st end part of Examples and the 1'st end part of Comparative Examples) parallel to the width direction W of the separation membrane element 1 were respectively regarded as a feed part 85 communicating with the feed and discharge opening 45 ((b) of Fig. 7) and a discharge part 86 communicating with the second discharge opening 46 ((b) of Fig. 7). In a state where respective valves of the discharge part 84, the feed part 85, and the discharge part 86 were closed, N₂ gas at a temperature of 20°C was fed from the feed part 83, and a pressure of 150 kPG (G represents a gage pressure) was applied while the pressure was checked with use of a manometer 81 provided at the feed part 83. The valve of the discharge part 86 was opened, and a flow rate of a permeate gas flowing out from the discharge part 86 was measured with use of a flowmeter 82 (a high-precision membrane flowmeter, VP-U series, manufactured by Horiba, Ltd.) provided at the discharge part 86 and was evaluated by the following criteria.

A: The flow rate of the permeate gas was not less than 0.2 mL/min.

B: The flow rate of the permeate gas was more than 0.2 mL/min.

**[Table 1]**

| | Sealing material | Peel strength [N/mm] | Gas leakage test |
|---|---|---|---|
| Example 1 | EA E-90FL | 21.2 | A |
| Example 2 | AR2310 | 16.1 | A |
| Example 3 | TB2203 | 29.5 | A |
| Comparative Example 1 | EA E-90FL | 2.2 | B |
| Comparative Example 2 | AR2310 | 1.6 | B |
| Comparative Example 3 | TB2203 | 2.7 | B |

### [Results]

As indicated by Table 1, each of the separation membrane elements in accordance with Comparative Examples had a low peel strength and a high flow rate of the permeate gas in the gas leakage test, in comparison with each of the separation membrane elements in accordance with Examples. Since the sealing material used was identical among Examples and Comparative Examples, it has become clear that a separation membrane element that has the configuration of the separation membrane element in accordance with an embodiment of the present invention is improved in peel strength and gas tightness.

### Reference Signs List

1: Separation membrane element
10: Laminate
11: 1st end part
12: 2nd end part
20: Membrane laminate part
21: Separation membrane
21a: First separation membrane (separation membrane)
21b: Second separation membrane (separation membrane)
22: Permeate-side spacer member
23: Feed-side spacer member
25: First tape
26: Second tape
31: First sealing part
32: Second sealing part
33a: Sealing material
33b: Sealing material
40: Container
41: Guide part
43: First feed opening
44: First discharge opening
45: Feed and discharge opening
46: Second discharge opening
47: Top face part
48: Bottom face part
49: Side wall part
81 Manometer
82: Flowmeter
83: Feed part
84: Discharge part
85: Feed part
86: Discharge part

## Claims

1. A separation membrane element, comprising:
a container; and
a separation membrane including a region provided in a shape of a flat membrane in the container,
the separation membrane including a separation functional layer that selectively separates a specific fluid component contained in a raw material fluid,
the container housing therein a laminate that includes (i) two permeate-side spacer members through each of which a permeate fluid that has permeated through the separation membrane flows, (ii) the separation membrane provided between the two permeate-side spacer members, and (iii) a feed-side spacer member through which the raw material fluid flows,
the separation membrane element further comprising a sealing part for preventing a fluid flowing through the feed-side spacer member and a fluid flowing through the two permeate-side spacer members from being mixed with each other,
the laminate including a 1st end part at which an end part of each of the two permeate-side spacer members is located further on an outer side than is an end part of the separation functional layer in a plan view,
the sealing part including a first sealing part provided at the 1st end part in a position that is further on the outer side than is the end part of the separation functional layer in the plan view and that is between the two permeate-side spacer members.

2. The separation membrane element as set forth in claim 1, wherein the first sealing part is an adhesive layer.

3. The separation membrane element as set forth in claim 1 or 2, wherein, when a specimen prepared by being cut out from the laminate so as to include the first sealing part is subjected to a T-peel test that causes peeling between the separation membrane and the feed-side spacer member, the specimen exhibits a peel strength of not less than 15.0 MPa.

4. The separation membrane element as set forth in claim 1 or 2, wherein:
the separation membrane includes the separation functional layer on a porous membrane;
in the plan view, the end part of each of the two permeate-side spacer members which end part is at the 1st end part is located further on the outer side than is an end part of the separation membrane; and
the first sealing part is located further on the outer side than is the end part of the separation membrane in the plan view.

5. The separation membrane element as set forth in claim 1 or 2, wherein:
in the plan view, the end part of each of the two permeate-side spacer members which end part is at the 1st end part is located further on the outer side than is an end part of the feed-side spacer member; and
the first sealing part is located further on the outer side than is the end part of the feed-side spacer member in the plan view.

6. The separation membrane element as set forth in claim 1 or 2, wherein:
the laminate includes a membrane laminate part in which the separation membrane, the feed-side spacer member, and the separation membrane are stacked in this order; and
the membrane laminate part is provided between the two permeate-side spacer members.

7. The separation membrane element as set forth in claim 6, wherein:
in the plan view, the end part of each of the two permeate-side spacer members which end part is at the 1st end part is located further on the outer side than is an end part of the membrane laminate part; and
the first sealing part is located further on the outer side than is the end part of the membrane laminate part in the plan view.

8. The separation membrane element as set forth in claim 1 or 2, wherein:
the laminate includes a 2nd end part extending in a direction intersecting with the 1st end part in the plan view;
the sealing part includes a second sealing part provided at positions corresponding to respective lamination positions of the two permeate-side spacer members in a lamination direction of the laminate; and
the second sealing part is provided at the 2nd end part.

9. The separation membrane element as set forth in claim 8, wherein the first sealing part and the second sealing part are bonded to each other at a position at which the 1st end part and the 2nd end part intersect with each other in the plan view.

10. The separation membrane element as set forth in claim 9, wherein the first sealing part and the second sealing part are each an adhesive layer.

11. The separation membrane element as set forth in claim 1 or 2, wherein the raw material fluid is gas.

12. The separation membrane element as set forth in claim 1 or 2, wherein the specific fluid component is acid gas.

13. A separation device, comprising:
a separation membrane element recited in claim 1 or 2;
a first feed part and a first discharge part each of which communicates with the feed-side spacer member; and
a second discharge part that communicates with the two permeate-side spacer members.

14. The separation device as set forth in claim 13, further comprising a second feed part that communicates with the two permeate-side spacer members.
